# EUROPEAN PATENT APPLICATION

(11) **EP 3 176 602 A1**
(43) Date of publication of application: **07.06.2017**
(21) Application number: 16757541.4
(22) Date of filing: 11.05.2016
(51) Int. Cl.: G01S 11/06, G08G 1/16

(54) **METHOD AND DEVICE FOR DETERMINING VEHICLE DISTANCE IN INTERNET OF VEHICLES**

(30) Priority: 16.10.2015 CN 201510673639
(71) Applicant: LE Holdings (Beijing) Co., Ltd., Beijing 100025 (CN); Leauto Intelligent Technology (BEIJING) Co. Ltd, Beijing 100025 (CN)
(72) Inventor: XU, Yong, Beijing 100025 (CN); CHEN, Kunsheng, Beijing 100025 (CN); LI, Wenrui, Beijing 100025 (CN); LIU, Peng, Beijing 100025 (CN); LIN, Wei, Beijing 100025 (CN)
(74) Representative: Botti, Mario
(86) International application number: PCT/CN2016/081746
(87) International publication number: WO 2017/063360

(57) **Abstract**

The present invention provides a method and device for determining the distance between vehicles in the Internet of Vehicles. Directional antennas are installed in the vehicles, and the directional antennas are connected with vehicular communication modules of the vehicles; and the method includes: receiving, by a first vehicle, vehicle positioning auxiliary information sent by a second vehicle through a second directional antenna, through a first directional antenna, wherein the vehicle positioning auxiliary information includes direction indication information of the second directional antenna, and transmitting power of the vehicle positioning auxiliary information; determining, by the first vehicle, the direction of the second vehicle relative to the first vehicle according to the direction indication information; and determining, by the first vehicle, the distance between the second vehicle and the first vehicle according to the transmitting power, and receiving power at which the first vehicle receives the vehicle

## Description

This application claims the benefit of Chinese Patent Application No. 201510673639.0, filed with the State Intellectual Property Office of People's Republic of China on October 16, 2015 and entitled "Method and device for determining the distance between vehicles in Internet of Vehicles", which is hereby incorporated by reference in its entirety.

### Field of Technology

The present invention relates to the field of the Internet of Vehicles and particularly to a method and device for determining the distance between vehicles in the Internet of Vehicles.

### Background

A communication standard applicable to the Internet of Vehicles is the IEEE 802.11p protocol. The IEEE 802.11p protocol (also referred to Wireless Access in the Vehicular Environment (WAVE)) is a communication protocol extended from the IEEE 802.11 protocol and primarily intended for vehicular electronic wireless communication. Vehicular electronic wireless communication can be conducted between vehicles or can be conducted between a vehicle and a road infrastructure network.

Physical layer and data link layer information of a communication network for the Internet of Vehicles is specified in the IEEE 802.11p protocol, where the specified physical layer information relates to a communication frequency, transmitting power, a signal modulation scheme, channel allocation, and other parameters, and the specified data link layer information relates to an access to the network in the Carrier Sense Multiple Access with Collision Avoidance (CSMA/CA) scheme in the IEEE 802.11p protocol.

Satellite positioning or assisted satellite positioning is typically enabled in the Internet of Vehicles to position a vehicle on the earth. Satellite positioning can be enabled with high precision of positioning up to less than one meter or even higher. As specified in the 802.11p standard, while one vehicle is communicating with another vehicle, the vehicle needs to send its positional information to vehicles preceding and following the vehicle, so that the following vehicle can determine the distance between the following vehicle and the preceding vehicle according to the precise positional information sent by the preceding vehicle to thereby guarantee a safety traveling distance. Especially in some special case, for example, if the preceding vehicle is braking suddenly, there is a collapse occurring on the road, the preceding vehicle is braking or decelerating suddenly because a risking object is falling off the preceding vehicle, etc., then the following vehicle can take a corresponding handling measure according to the distance between the following vehicle and the preceding vehicle.

However satellite positioning may be restricted in some scenario. For example, if it is raining or snowing, then a satellite signal may be significantly attenuated by vapor, or the vehicle an not receive any satellite signal in a shielded area, e.g., inside a tunnel, in which case satellite positioning may not work so that there will be no precise positional information available of the vehicle. On the other hand, there may be low precision in other positioning schemes, and if there is no precise positional information of the preceding vehicle available to the following vehicle in some emergent case, then the distance between the following and preceding vehicles can not be determined so that no corresponding braking measure can be taken while the preceding vehicle is braking suddenly, thus resulting in a hidden risk to the following traveling vehicle.

As can be apparent, it is highly desirable in the prior art to address the technical problem of how to determine the distance between the vehicles accurately if the satellite positioning system fails.

### Summary

Embodiments of the present invention provide a method and device for determining the distance between vehicles in the Internet of Vehicles so as to determine the distance between the vehicles if satellite positioning does not work.

An embodiment of the present invention provides a method for determining the distance between vehicles in the Internet of Vehicles, wherein directional antennas are installed in the vehicles, and the directional antennas are connected with vehicular communication modules of the vehicles; and the method includes:
receiving, by a first vehicle, vehicle positioning auxiliary information sent by a second vehicle through a second directional antenna, through a first directional antenna, wherein the vehicle positioning auxiliary information includes direction indication information of the second directional antenna, and transmitting power of the vehicle positioning auxiliary information;
determining, by the first vehicle, the direction of the second vehicle relative thereto according to the direction indication information; and
determining, by the first vehicle, the distance between the second vehicle and the first vehicle according to the transmitting power, and receiving power at which the first vehicle receives the vehicle positioning auxiliary information.

An embodiment of the present invention provides a device for determining the distance between vehicles in the Internet of Vehicles, the device includes an vehicular communication module, and a directional antenna connected with the vehicular communication module, wherein:
the directional antenna is configured to receive vehicle positioning auxiliary information sent by a second vehicle through a directional antenna of the second vehicle, wherein the vehicle positioning auxiliary information includes direction indication information of the directional antenna of the second vehicle, and transmitting power of the vehicle positioning auxiliary information; and
the vehicular communication module is configured to determine the direction of the second vehicle relative to a vehicle including the device, according to the direction indication information; and to determine the distance between the second vehicle and the vehicle including the device, according to the transmitting power, and receiving power at which the device receives the vehicle positioning auxiliary information.

An embodiment of the present invention provides an apparatus for determining the distance between vehicles in the Internet of Vehicles, the apparatus includes a memory and a processor, wherein the processor is configured to read program in the memory and to perform a processing including: receiving, by a first vehicle, vehicle positioning auxiliary information sent by a second vehicle through a second directional antenna, through a first directional antenna, wherein the vehicle positioning auxiliary information includes direction indication information of the second directional antenna, and transmitting power of the vehicle positioning auxiliary information; determining, by the first vehicle, the direction of the second vehicle relative thereto according to the direction indication information; and determining, by the first vehicle, the distance between the second vehicle and the first vehicle according to the transmitting power, and receiving power at which the first vehicle receives the vehicle positioning auxiliary information.

With the method and device for determining the distance between vehicles in the Internet of Vehicles according to the embodiments of the present invention, the vehicle receives the vehicle positioning auxiliary information sent by the other vehicle, through the directional antenna, determines the direction of the other vehicle relative to the vehicle according to the directional antenna direction indication information in the vehicle positioning auxiliary information, and determines the distance between the other vehicle and the vehicle according to the transmitting power of the vehicle positioning auxiliary information in the vehicle positioning auxiliary information and receiving power of the vehicle, thus determining the distance between the vehicles, and the relative direction between the vehicles.

### Brief Description of the Drawings

In order to describe more clearly the technical solutions according to the embodiments of the present invention or in the prior art, the drawings to which reference is made in the description of the embodiments or the prior art will be described below briefly, and evidently the drawings described below are merely illustrative of some of the embodiments of the present invention, and those ordinarily skilled in the art can further derive other drawings from these drawings without any inventive effort. In the drawings:
Fig.1 illustrates a schematic structural diagram of the connection between a directional antenna and an vehicular communication module according to the present invention;
Fig.2 illustrates a schematic diagram of a vehicle in which a directional antenna is installed according to the present invention;
Fig.3 illustrates a flow chart of a method for determining the distance between vehicles in the Internet of Vehicles according to an embodiment of the present invention;
Fig.4 illustrates a schematic diagram of a frame structure of a 802.11p data frame extended according to an embodiment of the present invention; and
Fig.5 illustrates a schematic structural diagram of a device for determining the distance between vehicles in the Internet of Vehicles according to an embodiment of the present invention.

### Description of the Embodiments

In order to make the objects, technical solutions, and advantages of the present invention more apparent, the technical solutions according to the embodiments of the present invention will be described below clearly and fully with reference to the drawings in the embodiments of the present invention, and apparently the embodiments described below are only a part but not all of the embodiments of the present invention. All the other embodiments which can occur to those ordinarily skilled in the art based upon the embodiments here in the present invention without any inventive effort shall fall into the clamed scope of the present invention.

A directional antenna refers to an antenna which transmits and receives electromagnetic waves strongly in one or more specific directions but weakly or not at all in other directions. With this characteristic of the directional antenna, the directional antenna can be installed on the vehicle to receive information sent by a nearby vehicle in the embodiment of the present invention.

Since the vehicle generally needs to collect information from preceding and following vehicles, a directional antenna configured to collect the information from the preceding vehicle, and a directional antenna configured to collect the information from the following vehicle can be installed respectively on the vehicle in a particular implementation, where for the sake of a convenient description, the antennas will be referred respectively to as a forward antenna and a backward antenna in the embodiment of the present invention. Both the forward antenna and the backward antenna are connected with a vehicular communication module to transmit the received information to the vehicular communication module, and to send information collected by the vehicular communication module from the vehicle to the preceding and following vehicles.

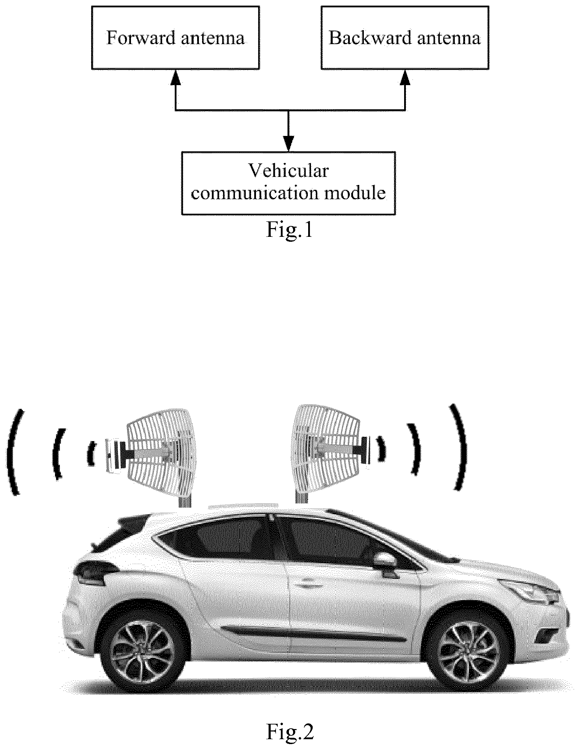

Particularly the forward antenna can only transmit and receive a radio wave forward, and the backward antenna can only transmit and receive a radio wave backward. The forward antenna is configured to receive the information sent by the preceding vehicle through the backward antenna, and to send the information from the vehicle to the backward antenna of the preceding vehicle; and the backward antenna is configured to receive the information sent by the following antenna through the forward antenna, and to send the information from the vehicle to the forward antenna of the following vehicle. Fig.1 illustrates a schematic structural diagram of the connection between the forward antenna, the backward antenna, and the vehicular communication module. Fig.2 illustrates a schematic diagram of the vehicle on which the forward antenna and the backward antenna are installed.

It shall be noted that the directional antennas as referred to as in the embodiment of the present invention can include but will not be limited to parabola antennas, Cassegrain antennas, Yagi antennas, etc. The vehicular communication module as referred to as in the embodiment of the present invention can include but will not be limited to an vehicular communication module supporting the 802.11p protocol, which can be a Telematics box (T-box, a vehicular Microsoft system) or a pre-installed In-Vehicle Infotainment, an On-Board Diagnostic (OBD) system or a post-installed In-Vehicle Infotainment, and even a Wireless Access in a Vehicular Environment Telematics Box (WAVE Box).

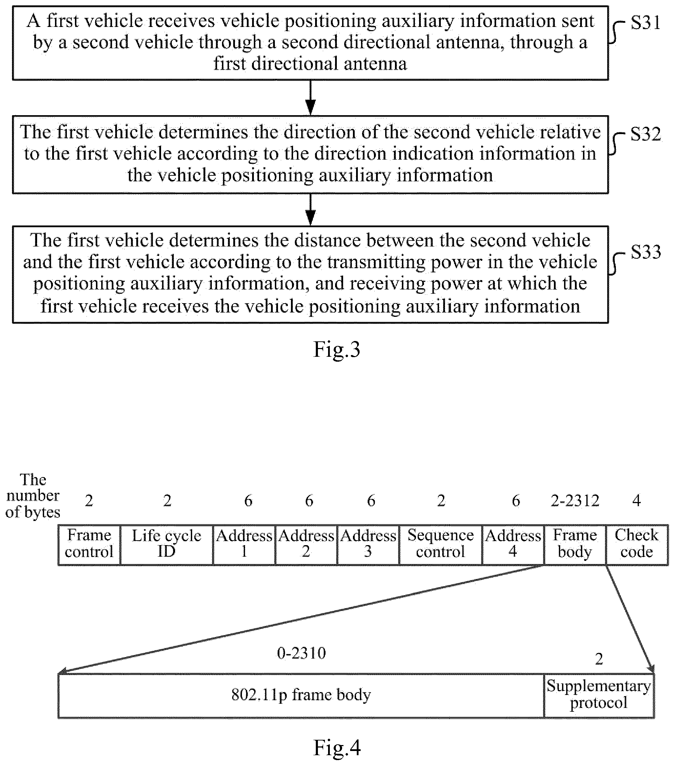

Hereupon an embodiment of the present invention provides a method for determining the distance between vehicles using a directional antenna, and as illustrated in Fig.3, the method can include the following steps:
S31. A first vehicle receives vehicle positioning auxiliary information sent by a second vehicle through a second directional antenna, through a first directional antenna.

Preferably the vehicle positioning auxiliary information includes direction indication information of the second directional antenna, and transmitting power of the vehicle positioning auxiliary information.

If the first vehicle follows the second vehicle, then the first directional antenna is a forward antenna, and the second directional antenna is a backward antenna; and if the first vehicle precedes the second vehicle, then the first directional antenna is a backward antenna, and the second directional antenna is a forward antenna. For the sake of a convenient description, the first vehicle follows the second vehicle as described in the embodiment of the present invention by way of an example, although the description of the embodiment in which the first vehicle follows the second vehicle will apply to an embodiment in which the first vehicle precedes the second vehicle.

In a particular implementation, a vehicular communication module of the second vehicle can encapsulate the vehicle positioning auxiliary information of the second vehicle in compliance with some communication protocol upon reception of the information, where the communication protocol can include but will not be limited to the 802.11p protocol. Since the vehicle positioning auxiliary information needs to be sent respectively to the preceding and following vehicles through the forward antenna and the backward antenna in the embodiment of the present invention, the vehicle positioning auxiliary information will be encapsulated into two data packets including one sent to the preceding vehicle through the forward antenna, and the other one sent to the backward vehicle through the backward antenna. For the sake of convenient understanding, the embodiment of the present invention will be described taking the 802.11p protocol as an example.

Since the vehicle positioning auxiliary information can not be transmitted in an existing 802.11p data frame, the 802.11p data frame will be extended in the embodiment of the present invention to thereby transmit the vehicle positioning auxiliary information to the preceding and following vehicles. Fig.4 illustrates a schematic structural diagram of the extended 802.11p data frame, where two bytes for transmission of the vehicle positioning auxiliary information are added to the field of the frame body in the 802.11p data frame. Particularly Table 1 depicts the structure of the two added bytes:

**Table 1**

| First byte | | | | | | | |
|---|---|---|---|---|---|---|---|
| ON/OFF | GPS | Front | Back | P/S | N/A | N/A | N/A |

| Second byte | | | | | | | |
|---|---|---|---|---|---|---|---|
| P:7 | P:6 | P:5 | P:4 | P:3 | P:2 | P:1 | P:0 |

Particularly in the first byte, ON/OFF indicates the enable state of the method for determining the distance between vehicles using a directional antenna, where the value of 1 indicates that the method for determining the distance between vehicles using a directional antenna is enabled, and the value of 0 indicates that the method for determining the distance between vehicles using a directional antenna is disabled; GPS indicates the state of the satellite positioning system, where the value of 1 indicates that current GPS information is valid, and the value of 0 indicates that current GPS information is invalid; Front indicates the state of the forward antenna of the vehicle, where the value of 1 indicates that the forward antenna is enabled, and the value of 0 indicates that the forward antenna is disabled; Back indicates the state of the backward antenna of the vehicle, where the value of 1 indicates that the backward antenna is enabled, and the value of 0 indicates that the backward antenna is disabled; P/S indicates a data processing scheme, where the value of 1 indicates that the data processing scheme is parallel data processing, and the value of 0 indicates that the data processing scheme is serial data processing; and N/A indicates a reserved bit.

In the second byte, P:7 to P:0 are configured to store binary numerals of integral values of transmitting power of vehicle positioning assistance information, which correspond to decimal numerals ranging from 0 dBm to 50 dBm.

It shall be noted that the vehicle positioning auxiliary information is encapsulated into the data packets in such a way that among the data packets into which the vehicle positioning auxiliary information is encapsulated for the different, the value of Front in the first byte in the data packet to be sent through the forward antenna directions is 1, and the value of Back thereof is 0; and the value of Front in the first byte in the data packet to be sent through the backward antenna is 0, and the value of Back is 1. The first vehicle sending the data packet including the vehicle positioning auxiliary information can determine from the values of Front and Back the direction of the second vehicle sending the data packet relative thereto. If Front is 1 and Back is 0, that is, the second vehicle sends the data packet through the forward antenna, then it indicates that the second vehicle is following the first vehicle; and if Front is 0 and Back is 1, that is, the second vehicle sends the data packet through the backward antenna, then it indicates that the second vehicle is preceding the first vehicle.

Thus the second vehicle sends the vehicle positioning auxiliary information to the first vehicle in the extended 802.11p data frame including the direction indication information of the directional antenna through which the information is sent (indicated by the values of Front and Back in the first byte in Table 1), and the transmitting power at which the information is transmitted (indicated by the second byte in Table 1).

S32. The first vehicle determines the direction of the second vehicle relative thereto according to the direction indication information in the vehicle positioning auxiliary information.

In a particular implementation, the first vehicle can parse the data packet sent by the second vehicle for the information in Table 1 above. For example, if the value of Front in the information sent by the second vehicle is 0, and the value of Back is 1, then it indicates that the second vehicle is preceding the first vehicle.

S33. The first vehicle determines the distance between the second vehicle and the first vehicle according to the transmitting power in the vehicle positioning auxiliary information, and receiving power at which the first vehicle receives the vehicle positioning auxiliary information.

Particularly the first vehicle can obtain from a physical layer chip thereof the receiving power at which the first vehicle receives the vehicle positioning auxiliary information sent by the second vehicle.

Particularly the first vehicle can determine the distance between the second vehicle and the first vehicle according to a loss of a radio signal through a free space, and particularly the loss through the free space is *P*₁ *- P*₂*,* which is defined as 201g(F) + 201g(D) + *R*, where *P*₁ represents the transmitting power at which the second vehicle transmits the vehicle positioning auxiliary information; *P*₂ represents the receiving power at which the first vehicle receives the vehicle positioning auxiliary information; F represents a preset communication frequency; D represents the distance between the first vehicle and the second vehicle; and *R* represents a preset constant. Particularly if the first vehicle and the second vehicle communicate with each other in compliance with the 802.11p protocol, then the value of F can be 5900 MHz, and the value of R can be 32.4 dB.

In a particular implementation, the method for determining the distance between vehicles according to the embodiment of the present invention can be applied as an auxiliary determination method in a scenario where satellite positioning does not work, that is, the first vehicle can enable the method for determining the distance between vehicles according to the embodiment of the present invention, that is, can transmit and receive the vehicle positioning auxiliary information to the preceding and following vehicles through the directional antennas, upon detecting a failure of its satellite positioning system. Alike the second vehicle can enable the method for determining the distance between vehicles according to the embodiment of the present invention, that is, can transmit and receive the vehicle positioning auxiliary information to the preceding and following vehicles through the directional antennas, upon detecting a failure of its satellite positioning system.

That is, in the embodiment of the present invention, the method can further include the following steps before the step S31 is performed:

In the first step, the first vehicle detects whether its satellite positioning system fails.

In the second step, the first vehicle enables directional antennas to receive vehicle positioning auxiliary information, upon detecting a failure of its satellite positioning system.

Particularly the second vehicle can indicate whether its satellite positioning system fails, using the value of GPS in Table 1, so that the first vehicle can judge whether the GPS of the second vehicle fails, according to the value of GPS in a received data packet, and if so, then the first vehicle can determine the direction of the second vehicle relative thereto according to the values of Front and Back in a received data packet, and determine the transmitting power of the second vehicle according to the second byte in Table 1, and thus determine the distance between the second vehicle and the first vehicle.

In a particular implementation, since the vehicular communication module needs to process two branches of data from the forward antenna and the backward antenna, the vehicular communication module supporting parallel data processing can process the two branches of data simultaneously if they do not interfere with each other, whereas the vehicular communication module which does not support parallel data processing can only process the two received branches of data through serial data processing, and in this case, since the vehicular communication module can only process one of the branches of data at a time, if the vehicular communication module receives the other branch of data at that time, then the other branch of data will have to wait for processing after the entire preceding branch of data has been processed, and the waiting branch of data may be discarded due to timing-out in processing of the preceding branch of data or another reason. In order to address this problem, in the embodiment of the present invention, the vehicle positioning auxiliary information can include data processing scheme indication information (indicated by P/S in Table 1), where if the value thereof is P, then it indicates that the data transmitter (the second vehicle in this example) supports parallel data processing, and if the value thereof is S, then it indicates that the data transmitter supports serial data processing. In order to improve the possibility of successful data reception in serial data processing, in the embodiment of the present invention, if the first vehicle determines from the vehicle positioning auxiliary information sent by the second vehicle that the data processing scheme of the second vehicle is serial processing, then the first vehicle can enable a retransmission mechanism to send its vehicle positioning auxiliary information to the second vehicle when sending its vehicle positioning auxiliary information to the second vehicle.

In a particular implementation, if the first vehicle determines from the received vehicle positioning auxiliary information that the satellite positioning system of the second vehicle is enabled again (as determined from GPS in Table 1), then the first vehicle can determine the distance between the second vehicle relative thereto according to the positional information of the second vehicle determined by the satellite positioning system.

In order to better understand the embodiment of the present invention, an implementation of the present invention will be described below in connection with a particular embodiment thereof.

If there are two vehicles A and B in which directional antennas are installed, then they are spaced by 300 meters and the vehicle A is preceding the vehicle B. A vehicle-to-vehicle communication mechanism has been established between the vehicles, both of which are traveling through a tunnel with the length of 10 KM, and their satellite positioning system fail. At the turning of the tunnel, the vehicle A detects a trashed tire in the middle of the road before itself, so the vehicle A is braking suddenly. Since no satellite signal can be received, both of the vehicles entering the tunnel have enabled immediately the method for determining the distance between vehicles using directional antennas. At the turning of the tunnel, the vehicle A detects a tire occurring in the middle of the road before itself, so the vehicle A is braking suddenly, and sends urgent braking information and vehicle positioning auxiliary information to the vehicle B through the backward antenna. The vehicle B receives the urgent braking information and the vehicle positioning auxiliary information through the forward antenna, and determines that the vehicle A is braking suddenly 300 meters ahead, and thereafter the vehicle B is also braking suddenly, thus securing both of the traveling vehicles.

Based upon the same inventive idea, an embodiment of the present invention further provides a device for determining the distance between vehicles in the Internet of Vehicles, and since the device above addresses the problem under a similar principle to the method for determining the distance between vehicles in the Internet of Vehicles, reference can be made to the implementation of the method for implementations of the device and system above, although a repeated description thereof will be omitted here.

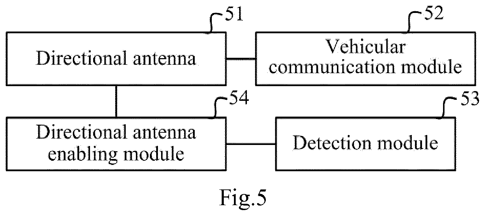

As illustrated in Fig.5, there is a schematic structural diagram of a device for determining the distance between vehicles in the Internet of Vehicles according to an embodiment of the present invention, which includes an vehicular communication module, and a directional antenna connected with the vehicular communication module, where:

The directional antenna 51 is configured to receive vehicle positioning auxiliary information sent by a second vehicle through a directional antenna of the second vehicle, where the vehicle positioning auxiliary information includes direction indication information of the directional antenna of the second vehicle , and transmitting power of the vehicle positioning auxiliary information; and

The vehicular communication module 52 is configured to determine the direction of the second vehicle relative to a vehicle including the device, according to the direction indication information; and to determine the distance between the second vehicle and the vehicle including the device, according to the transmitting power, and receiving power at which the device receives the vehicle positioning auxiliary information.

Preferably the vehicular communication module 52 is configured to determine the distance between the second vehicle and the vehicle including the device, in the equation of *P*₁ - *P*₂ = 201g(F) + 201g(D) + *R*, where *P*₁ represents the transmitting power; *P*₂ represents the receiving power; F represents a preset communication frequency; D represents the distance between the second vehicle and the vehicle including the device; and R represents a preset constant.

In a particular implementation, the device for determining the distance between vehicles in the Internet of Vehicles according to the embodiment of the present invention can further include:

A detecting module 53 is configured to detect whether a satellite positioning system of the vehicle including the device fails; and

A directional antenna starting module 54 is configured to start the directional antenna to receive the vehicle positioning auxiliary information, when the detecting module detects the satellite positioning system of the vehicle including the device fails.

Preferably the vehicle positioning auxiliary information further includes data processing scheme indication information of the second vehicle; and

The vehicular communication module 52 is further configured to start a retransmission mechanism to send its vehicle positioning auxiliary information to the second vehicle upon determining a data processing scheme of the second vehicle as serial processing according to the data processing scheme indication information, when sending the vehicle positioning auxiliary information of the vehicle including the device to the directional antenna of the second vehicle through the directional antenna.

The embodiments of the device described above are merely exemplary, where the units described as separate components may or may not be physically separate, and the components illustrated as elements may or may not be physical units, that is, they can be collocated or can be distributed onto a number of network elements. A part or all of the modules can be selected as needed in reality for the purpose of the solution according to the embodiments of the present invention. This can be understood and practiced by those ordinarily skilled in the art without any inventive effort.

Those skilled in the art can clearly appreciate from the foregoing description of the embodiments that the embodiments of the present invention can be implemented in hardware or in software plus a necessary general hardware platform. Based upon such understanding, the technical solutions above essentially or their parts contributing to the prior art can be embodied in the form of a computer software product which can be stored in a computer readable storage medium, e.g., an ROM/RAM, a magnetic disk, an optical disk, etc., and which includes several instructions to cause a computer device (e.g., a personal computer, a server, a network device, etc.) to perform the method according to the respective embodiments of the present invention.

Lastly it shall be noted that the embodiments above are merely intended to illustrate but not to limit the technical solution of the present invention; and although the present invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the present invention as claimed.

## Claims

1. A method for determining distance between vehicles in the Internet of Vehicles, wherein directional antennas are installed in the vehicles, and the directional antennas are connected with vehicular communication modules of the vehicles; and the method comprises:
receiving, by a first vehicle, vehicle positioning auxiliary information sent by a second vehicle through a second directional antenna, through a first directional antenna, wherein the vehicle positioning auxiliary information comprises direction indication information of the second directional antenna, and transmitting power of the vehicle positioning auxiliary information;
determining, by the first vehicle, the direction of the second vehicle relative to the first vehicle according to the direction indication information; and
determining, by the first vehicle, the distance between the second vehicle and the first vehicle according to the transmitting power, and receiving power at which the first vehicle receives the vehicle positioning auxiliary information.

2. The method according to claim 1, wherein the determining, by the first vehicle, the distance between the second vehicle and the first vehicle according to the transmitting power, and the receiving power at which the first vehicle receives the vehicle positioning auxiliary information comprises:
determining, by the first vehicle, the distance of the second vehicle from the first vehicle in the equation of *P*₁ *- P*₂ = 201g(F) + 201g(D) + *R,* wherein:
*P*₁ represents the transmitting power;
*P*₂ represents the receiving power;
F represents a preset communication frequency;
D represents the distance between the first vehicle and the second vehicle; and
*R* represents a preset constant.

3. The method according to claim 1, wherein before the receiving, by the first vehicle, vehicle positioning auxiliary information sent by the second vehicle through the second directional antenna, through the first directional antenna, the method further comprises:
detecting, by the first vehicle, whether a satellite positioning system of the first vehicle fails; and
starting, by the first vehicle, the directional antenna to receive the vehicle positioning auxiliary information, upon detecting that the satellite positioning system of the first vehicle fails.

4. The method according to claim 1, wherein the vehicle positioning auxiliary information is sent by the second vehicle in an extended 802.11p data frame comprising a field for transmitting the vehicle positioning auxiliary information.

5. The method according to claim 1, wherein the vehicle positioning auxiliary information further comprises data processing scheme indication information of the second vehicle; and
the method further comprises:
starting, by the first vehicle, a retransmission mechanism to send the vehicle positioning assistance information of the first vehicle to the second vehicle upon determining a data processing scheme of the second vehicle as serial processing according to the data processing scheme indication information, when sending the vehicle positioning auxiliary information of the first vehicle to the second directional antenna of the second vehicle through the first directional antenna.

6. The method according to claim 1, wherein the receive power is obtained by the first vehicle from a physical layer chip thereof.

7. A device for determining the distance between vehicles in the Internet of Vehicles, comprising an vehicular communication module, and a directional antenna connected with the vehicular communication module, wherein:
the directional antenna is configured to receive vehicle positioning auxiliary information sent by a second vehicle through a directional antenna of the second vehicle, wherein the vehicle positioning auxiliary information comprises direction indication information of the directional antenna of the second vehicle, and transmitting power of the vehicle positioning auxiliary information; and
the vehicular communication module is configured to determine the direction of the second vehicle relative to a vehicle including the device, according to the direction indication information; and to determine the distance between the second vehicle and the vehicle including the device, according to the transmitting power, and receiving power at which the device receives the vehicle positioning auxiliary information.

8. The device according to claim 7, wherein:
the vehicular communication module is configured to determine the distance between the second vehicle and the vehicle including the device, in the equation of *P*₁ *- P*₂ = 201g(F) + 201g(D) + *R*, wherein *P*₁ represents the transmitting power; *P*₂ represents the receiving power; F represents a preset communication frequency; D represents the distance between the second vehicle and the vehicle including the device; and *R* represents a preset constant.

9. The device according to claim 7, further comprising:
a detecting module configured to detect whether a satellite positioning system of the vehicle including the device fails; and
a directional antenna starting module configured to start the directional antenna to receive the vehicle positioning auxiliary information, when the detecting module detects the satellite positioning system of the vehicle including the device fails.

10. The device according to claim 7, wherein the vehicle positioning auxiliary information further comprises data processing scheme indication information of the second vehicle; and
the vehicular communication module is further configured to start a retransmission mechanism to send the vehicle positioning assistance information of the first vehicle to the second vehicle upon determining a data processing scheme of the second vehicle as serial processing according to the data processing scheme indication information, when sending the vehicle positioning auxiliary information of the vehicle including the device to the directional antenna of the second vehicle through the directional antenna.
